# EUROPEAN PATENT SPECIFICATION

(11) **EP 3 311 977 B1**
(45) Date of publication and mention of the grant of the patent: **24.06.2020**
(21) Application number: 17196969.4
(22) Date of filing: 18.10.2017
(51) Int. Cl.: B29C 48/94, B29C 48/09, B29C 48/90, B29C 48/30, B29C 48/21, B29L 23/18, B29C 48/13

(54) **PLASTIC PIPE MACHINE MANDREL COOLING AND LUBRICATING ASSEMBLY**
KÜHL- UND SCHMIERANORDNUNG FÜR EINEN KUNSTSTOFFROHRMASCHINENDORN
ENSEMBLE DE REFROIDISSEMENT ET DE LUBRIFICATION DU MANDRIN D'UNE MACHINE DE FABRICATION DE TUYAU EN PLASTIQUE

(30) Priority: 18.10.2016 TR 201614668
(43) Date of publication of application: 25.04.2018
(73) Proprietor: Canlar Boru Profil Plastik Elekt.Ins.Mak.Nak.San. Ve Tic.Ltd.Sti., Ankara (TR)
(72) Inventor: INCILI, Emre, Ankara (TR)
(74) Representative: Dericioglu, E. Korhan

(56) References cited:
- EP-A1- 0 381 938
- EP-A2- 1 867 460
- WO-A1-87/04113
- DE-A1- 2 316 835
- DE-A1- 2 366 018
- JP-A- H01 221 219
- US-A- 3 320 637

## Description

### Field of the Invention

The present invention particularly relates to cooling the surface of the cooling and shaping mandrel used in double-wall or multi-wall corrugated pipe production and reducing the friction on the mandrel surface.

### Background of the Invention

Production of a single-wall, double-wall or multi-wall plastic pipe is performed by placing the molten raw material into the mold and cooling. The molten raw material in the pipe production machine is delivered to the external wall mold and inner part with the nozzles, and when the molten raw material is cooled on the mold and removed from the mold, the plastic pipe is produced. There is provided a mandrel on the inner surface of the pipe for cooling the molten raw material placed on the external wall mold and shaping the molten plastic provided for the pipe inner wall. The mandrel has a circular structure so as to shape the inner surface of the pipe and the mandrel outer surface is in contact with the inner surface of the pipe. In addition, there are cooling water channels in the inner part of the mandrel for cooling the molten raw material placed on the mold.

One of the important factors influencing the pipe production rate is production of the pipe's inner wall. The factors affecting pipe inner wall production rate are the temperature of the mandrel mold used for cooling the pipe inner wall and the amount of friction between the molten plastic and the mandrel mold and the heat transmission efficiency between the same. In the current technique of forming the inner wall, heat transmission and the molten plastic being cooled and shaped are realized by contact of the molten plastic with the mandrel outer surface. Microsize gaps reduce heat transmission during contact of the molten plastic surface with the mandrel outer surface. Upon reduction of heat transmission, the cooling time of the pipe inner wall is extended. Extension of the cooling time reduces the overall production rate of the machine. Additionally, upon increase of the friction resulting depending on the production rate, both the pipe inner wall and the mandrel surface are deformed and particularly the mandrel's useful life decreases and additional heat results due to the high friction.

In the current art, there are studies about changing the material properties of the plastic pipe for addressing the technical problems of decreasing friction and increasing heat conductivity. Before the plastic pipe is shaped, friction is reduced by means of the additives added to the material structure, but adequate efficiency cannot be attained with this method.

Another technical problem in the current art is inability to produce a pipe having a very slippery inner wall. In cases when required by the customer (passing cables through the pipe, etc.), lubricants such as soap and oil are applied on the inner wall of the pipe. Since this process performed by the user afterwards is a very inconvenient application requiring an additional cost and it is not possible to completely lubricate the entire inner part of the pipe, sufficient lubricity cannot be provided.

The patent document no. US3320637A, an application in the state of the art, discloses about directing the coolant passing through the mandrel in the thermoplastic pipe production line between the mandrel and the pipe. In the said invention, the coolant passing through the mandrel can pass to the mandrel surface via the holes extending from inside of the mandrel to the mandrel surface and enables cooling. In the said invention, the coolant passing through the mandrel and the coolant used between the mandrel and the pipe are the same. In the said invention, high pressure is required for the coolant passing through the mandrel in order for the coolant to rise to the mandrel surface.

The patent document no. EP0381938 prelates to an apparatus for molding thermoplastic tubing. The apparatus may be an apparatus for molding single plain walled tubing or may be of the travelling mold type for molding corrugated, ribbed or various other configurations including double walled tubing of various types. A sizing plug for the internal diameter of the pipe is provided with means for applying suction to the inside diameter of the pipe with a view to smoothing the inside of the pipe and allowing faster pipe forming. Suitably, the plug is a cooling plug and provision may be made for communicating the suction to cooling liquid to draw it to the surface of the plug. This may provide lubrication to further speed the pipe forming process.

### Problems Solved by the Invention

The objective of the present invention is to provide a plastic pipe machine mandrel cooling assembly which enables to obtain a surface with high heat transmission between the mandrel surface and the pipe by delivering a lubricating fluid (oil, etc.) between the pipe and the mandrel used in pipe production.

The objective of the present invention is to provide a plastic pipe machine mandrel cooling assembly which enables to reduce the friction between the mandrel surface and the pipe inner wall by means of the fluid delivered between the pipe and the mandrel used in pipe production.

The objective of the present invention is to provide a plastic pipe machine mandrel cooling assembly which comprises an additional fluid pipe in order to deliver the friction-reducing fluid to the mandrel surface.

The objective of the present invention is to provide a plastic pipe machine mandrel cooling assembly which, by delivering the friction-reducing fluid in alignment with the mandrel and the nozzle outlet, enables the molten plastic to directly contact the friction-reducing fluid without contacting the mandrel surface.

Another objective of the present invention is to provide a plastic pipe machine mandrel cooling assembly which produces a pipe whose inner wall is lubricous by delivering a lubricating fluid between the mandrel and the plastic pipe.

The objective of the present invention is to provide a plastic pipe machine mandrel cooling assembly which enables the plastic pipe machine to achieve faster pipe production by reducing the time of contact of the molten plastic with the mandrel.

The objective of the present invention is to enable cooling of the plastic also by a cooling lubricant in addition to the mandrel by delivering the cooling lubricant in between the mandrel and the plastic pipe.

The problem is solved by the pipe mold system according to claims 1 or 2.

### Detailed Description of the Invention

The plastic pipe machine mandrel cooling assembly developed to fulfill the objective of the present invention is illustrated in the accompanying figures wherein,

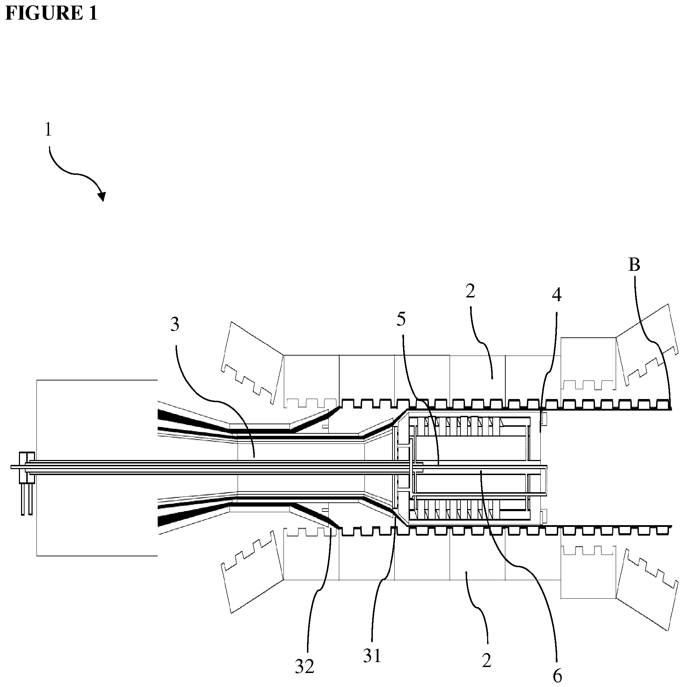

- **Figure 1.**: is a top sectional view of the plastic pipe machine mandrel cooling assembly.

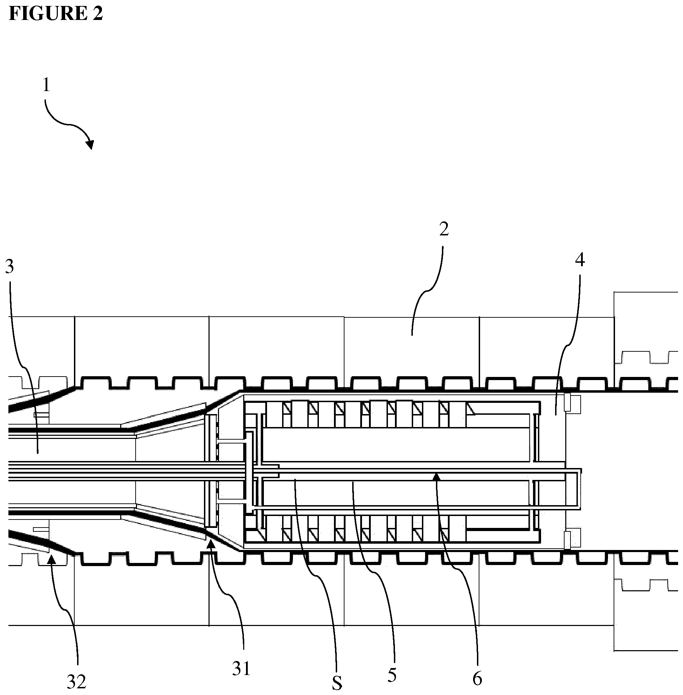

- **Figure 2.**: is a top sectional detail view of the plastic pipe machine mandrel cooling assembly.

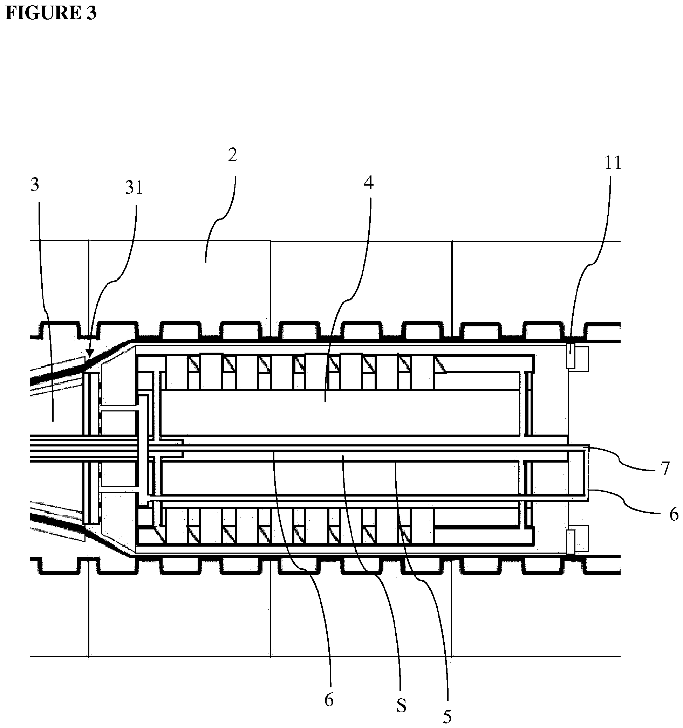

- **Figure 3.**: is a top sectional magnified detail view of the plastic pipe machine mandrel cooling assembly.

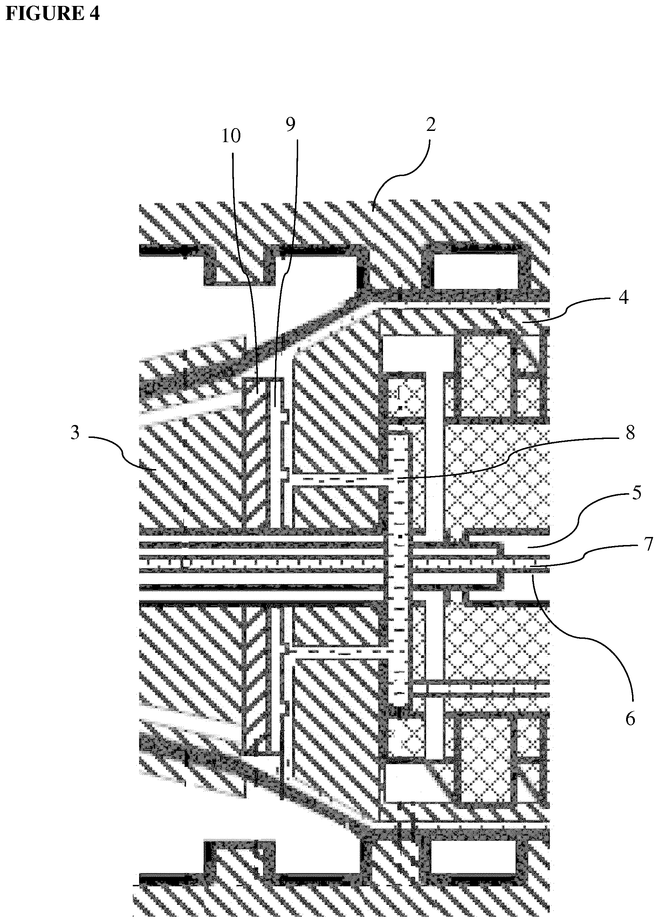

- **Figure 4.**: is a top sectional magnified detail view of the plastic pipe machine mandrel cooling assembly.

The components in the figures are each given reference numbers as follows:
**1.** Pipe mold system
**2.** External mold
**3.** Head mold
   **31.** First nozzle
   **32.** Second nozzle
**4.** Mandrel
**5.** Channel
**6.** Transfer pipe
**7.** Lubricating fluid
**8.** Collector
**9.** Dispersing disc
**10.** Insulation disc
**11.** Scraper
**B.** Plastic pipe
**S.** Coolant

In plastic pipe (B) production; the pipe mold system (1), which enables the inner wall of the plastic pipe (B) to be exposed to less friction and to cool more rapidly, basically comprises
- at least one external mold (2) which enables to shape the plastic pipe (B) as the plastic pipe (B) molten material is placed into the circular inner part thereof,
- at least one head mold (3), which forms a body for carrying the molten material to the external mold (2) via the passage holes provided thereon, and which has at least one first nozzle (31) that is located at the end part of the passage holes and enables the molten material to be delivered onto the external mold (2),
- at least one circular mandrel (4) which is located at the end part of the head mold (3) where the first nozzle (31) is provided and within the external mold (2), and which enables to shape the inner wall of the plastic pipe (B) by contacting the inner wall of the plastic pipe (B) formed on the external mold (2),
- at least one channel (5), which extends through the mandrel (4) and the head mold (3), and which carries therein the coolant (S) that enables to eliminate the heat resulting on the outer surface of the mandrel (4) and to cool the plastic pipe (B),
- at least one transfer pipe (6), which extends between the mandrel (4) and the first nozzle (31) upon passing through the channel (5), and which has a hollow structure,
- at least one lubricating fluid (7) which passes through the transfer pipe (6) and is spread between the mandrel (4) and the plastic pipe (B) inner wall, reduces the friction occurring between the mandrel (4) and the plastic pipe (B) inner wall, and increases the heat transfer between the plastic pipe (B) and the mandrel (4),
- at least one collector (8), which is located on the end part of the plastic pipe (B) that is between the first nozzle (31) and the mandrel (4), and which directs the lubricating fluid (7) so that it is delivered to different upper surface areas of the mandrel (4),
- at least one dispersing disc (9), which is located between the first nozzle (31) and the mandrel (4), and which enables the lubricating fluid (7) leaving the collector to be transferred in between the mandrel (4) surface and the plastic pipe (B) inner wall,
- at least one insulation disc (10), which is located between the dispersing disc (9) and the head mold (3) body, and which has heat insulating property,
- at least one tank which is preferably located at the outer part of the head mold (3) and connected to the transfer pipe (6), and in which the lubricating fluid (7) intended to be delivered to the mandrel (4) surface is stored,
- at least one pump which is located on the tank and which enables the lubricating fluid (7) to be pressurized in the transfer pipe (6),
- at least one cooling system or at least one cooling exchanger which is preferably located on the tank and enables to cool the lubricating fluid (7),
- at least one filter which enables to filter the lubricating fluid (7) that will be used,
- at least one air-liquid mixer, which preferably enables to save on the lubricating fluid (7) that will be used, and which mixes the lubricating fluid (7) and air and delivers the mixture to the transfer pipe (6),
- at least one scraper (11), which is located on the other end of the mandrel (4) where the transfer pipe (6) is not located, and which enables to scrape the lubricating fluid (7) layer formed in the inner part of the plastic pipe (B) from the plastic pipe (B) inner wall,
- at least one recycling system which collects the lubrication fluid (7) removed from the plastic pipe (B) via the scraper (11) and delivers it to the tank for reuse,
- at least one control unit, which sends a command to the pump to automatically operate or cease operation upon operation or stoppage of the plastic pipe (B) production system, enables the lubricating fluid to be delivered to the transfer pipe (6) intermittently or regularly, adjusts the amount of lubricating fluid consumption and adjusts the oil pressure.

The pipe mold system (1) of the present invention essentially comprises an external mold (2) on which the molten plastic is placed to be shaped and to acquire the form of a pipe, a head mold (3) which includes passage holes thereon that enable to deliver the molten plastic to the external mold (2), a first nozzle (31) located on the end of the passage hole, a mandrel (4) which is located inside the external mold (2) and which shapes the plastic pipe (B) inner wall, a channel (5) which passes through the mandrel (4) and the head mold (3) and carries the coolant (S), a transfer pipe (6) which extends through the channel (5) towards between the mandrel (4) and the first nozzle (31), a lubricating fluid (7) which is spread from the transfer pipe (6) onto the mandrel (4), and a dispersing disc (9), located between the first nozzle (31) and the mandrel (4).

In the pipe mold system (1) of the present invention, while the molten plastic material is delivered from the head mold (3) onto the external mold (2) by means of the first nozzle (31), the lubricating fluid (7) is delivered from a tank where the lubricating fluid (7) is located into the transfer pipe (6). The lubricating fluid (7), which passes through the transfer pipe (6) and proceeds from between the first nozzle (31) and the mandrel (4), is dispersed on the mandrel (4) and prevents direct contact of the mandrel (4) and the plastic pipe (B) inner wall delivered onto the external mold (2). Upon dispersion of the lubricating fluid (7) onto the mandrel (4) from between the first nozzle (31) and the mandrel (4), the molten pipe material (pipe inner wall) placed on the external mold (2) contacts the lubricating fluid (7) without contacting the mandrel (4) thereby reducing the friction that is likely to occur along the mandrel (4). Furthermore, after the lubricating fluid (7) passes between the mandrel (4) and the plastic pipe (B) inner wall, the plastic pipe (B) inner wall transfers its heat to the lubricating fluid (7) and is cooled more rapidly.

One of the most significant properties of the pipe mold system (1) of the present invention is positioning the transfer pipe (6) such that it proceeds from between the mandrel (4) and the head mold (3). By this means, the lubricating fluid (7) within the transfer pipe (6) contacts the mandrel (4) surface before the molten plastic contacts the mandrel (4), thereby preventing the molten plastic sprayed from the first nozzle (31) from directly contacting the mandrel (4).

In one embodiment of the invention, the pipe mold system (1) is used in production of double wall plastic pipe. The external mold (2) has an indented structure (with troughs and ridges) so as to form a corrugated double wall form. In order to form a corrugated double wall pipe, in addition to the first nozzle (31) which delivers molten material to the external mold's (2) troughs, there is provided a second nozzle (32) which delivers molten plastic pipe material to the ridges of the external mold (2).

In one embodiment of the invention, the transfer pipe (6) passes through the channel (5) passing through the mandrel (4) and then proceeds in between the mandrel (4) and the plastic pipe (B) inner wall. The transfer pipes (6) travel within the channel (5) inside the mandrel (4) and the lubricating fluid (7) carried therein is cooled upon performing heat transfer with the coolant passing through the channel (5). By this means, the fluid is spread in between the mandrel (4) and the plastic pipe (B) inner wall in a cold state thereby enabling the pipe inner wall to be cooled more rapidly.

According to the invention, there is provided a collector (8), which is located on the outlet end of the transfer pipe (6) between the mandrel (4) and the first nozzle (31), and which enables the lubricating fluid (7) to be dispersed so that it is delivered to all of the surfaces of the mandrel (4). The lubricating fluid (7) coming to the collector (8) is directed such that it will be delivered to different surfaces of the mandrel (4) by means of a plurality of ductules located on the collector (8) and extending towards the surfaces of the mandrel (4).

According to the invention, there is provided at least one dispersing disc (9), which is disposed on the end of the collector (8) and located between the first nozzle (31) and the mandrel (4), and which enables the lubricating fluid (7) leaving the collector to pass through the grooves therein and to be equally and evenly transferred in between the mandrel (4) surface and the plastic pipe (B) inner wall. The dispersing disc (9) delivers the lubricating fluid (7) coming thereon to different areas of the mandrel (4) by means of its grooves and enables the lubricating fluid (7) to be spread equally and evenly on the surface area of the mandrel (4). When necessary, the dispersing disc (9) rotates around its own axis like a wheel under the impact of the lubricating fluid (7) thereby performing a better distribution of the lubricating fluid (7). When necessary, the rotational movement of the dispersing disc (9) prevents the lubricating fluid (7) from getting accumulated at the lower part under the influence of gravity.

In one embodiment of the invention, there is provided an insulation disc (10), which is located between the first nozzle (31) and the mandrel (4), and which enables to reduce heating of the lubricating fluid (7) upon contacting the first nozzle (31). The insulation disc (10) is made of a high insulation material.

In one embodiment of the invention, the lubricating fluid (7) is located in an oil tank on the outside of the head mold (3), and when the pipe production starts, it is pumped to the transfer pipes (6) by means of a pump provided on the oil tank.

In one embodiment of the invention, there is a scraper (11) on the other end of the mandrel (4) on which the transfer pipe (6) is not located. The scraper (11) contacts the lubricating fluid (7) remaining on the plastic pipe (B) inner wall and scrapes the lubricating fluid (7) from the plastic pipe (B) inner wall. In cases where the pipe inner wall is preferred to be slippery, the scraper (11) is deactivated and a plastic pipe having a slippery inner wall is produced.

In one embodiment of the invention, there is provided a recycling system which collects the lubricating fluid (7) scraped from the plastic pipe (B) inner wall by the scraper (11) and delivers it into the tank for reuse. By this means, the lubricating fluid (7) that is used is filtered and it is enabled to be reused, and thus the requirement of continuously filling the tank is eliminated and the lubricating fluid (7) is enabled to be used over and over again.

In one embodiment of the invention, there is provided a control unit which enables the pump to automatically function or stop when the system is operated or stopped, controls the lubricating fluid (7) pressure and amount of the lubricating fluid (7) to be pumped, and enables periodic or continuous operation for production of the plastic pipe (B) from the molten material. The control unit is preferably connected with the plastic pipe machine control unit.

In one embodiment of the invention, there is provided an interface for delivering the lubricating fluid (7) pressure adjustment, amount and the time of transferring it to the transfer pipe (6) as inputs to the control unit. The operator sends the requested data to the control unit via the interface, and in accordance with the inputs, the control unit sends a command to the pump to start operation. In one embodiment of the invention, the interface is a touch screen.

In one embodiment of the invention, leaving the lubricating fluid (7) in the plastic pipe (B) inner wall or cleaning of the lubricating fluid (7) from the plastic pipe (B) inner wall is automatically realized by the control unit during the pipe production according to the preference of the customer. When the operator chooses one of the options of the plastic pipe (B) inner wall including the lubricating fluid (7) or the plastic pipe (B) inner wall cleared of the lubricating fluid (7), the control unit enables the scraper (11) to be automatically activated or deactivated.

In one embodiment of the invention, the lubricating fluid (7) is an oil which reduces friction and has cooling ability. In the said embodiment, the oil is suitable for being used between the mandrel (4) and the plastic pipe (B) inner wall due to its friction- and abrasion-reducing property.

In one embodiment of the invention, the lubricating fluid (7) is a silicone-based lubricant which reduces friction and has cooling ability. In the said embodiment, the silicone-based lubricant is suitable for being used between the mandrel (4) and the plastic pipe (B) inner wall due to its friction- and abrasion-reducing property.

In one embodiment of the invention, there is provided an air-liquid mixer which enables the air to be sent onto the mandrel (4) via the transfer pipe (6) together with the lubricating fluid (7). The air-liquid mixer mixes the lubricating fluid (7) with air and pressurizes them into the transfer pipe (6). An injector provided on the end of the transfer pipe (6) enables the mixture of air and lubricating fluid (7) leaving the transfer pipe (6) to be injected in between the mandrel (4) and the molten plastic. This way, the lubricating fluid (7) is enabled to be used in smaller quantities.

In one embodiment of the invention, there is provided a filter which is preferably located at the inlet of the transfer pipe (6) and prevents passage of foreign matter into the transfer pipe (6).

## Claims

1. A pipe mold system (1), which, in plastic pipe (B) production, enables the inner wall of the plastic pipe (B) to be exposed to less friction and to be cooled more rapidly, **comprising**
- at least one external mold (2) which enables to shape the plastic pipe (B) as the plastic pipe (B) molten material is placed into the circular inner part thereof,
- at least one head mold (3), which forms a body for carrying the molten material to the external mold (2) via the passage holes provided thereon, and which has at least one first nozzle (31) that is located at the end part of the passage holes and enables the molten material to be delivered onto the external mold (2),
- at least one circular mandrel (4) which is located at the end part of the head mold (3) where the first nozzle (31) is provided and within the external mold (2), and which enables to shape the inner wall of the plastic pipe (B) by contacting the inner wall of the plastic pipe (B) formed on the external mold (2),
- at least one channel (5), which extends through the mandrel (4) and the head mold (3), and which carries therein the coolant (S) that enables to eliminate the heat resulting on the outer surface of the mandrel (4) and to cool the plastic pipe (B),
- at least one transfer pipe (6), which extends between the mandrel (4) and the first nozzle (31) upon passing through the channel (5), and which has a hollow structure,
- at least one lubricating fluid (7) which passes through the transfer pipe (6) and is spread between the mandrel (4) and the plastic pipe (B) inner wall, reduces the friction occurring between the mandrel (4) and the plastic pipe (B) inner wall, and increases the heat transfer between the plastic pipe (B) and the mandrel (4),
- at least one collector (8), which is located on the end part of the plastic pipe (B) that is between the first nozzle (31) and the mandrel (4), and which directs the lubricating fluid (7) so that it is delivered to different upper surface areas of the mandrel (4) and **characterized by**
- at least one dispersing disc (9), which is located between the first nozzle (31) and the mandrel (4), and which enables the lubricating fluid (7) leaving the collector to be transferred in between the mandrel (4) surface and the plastic pipe (B) inner wall.

2. A pipe mold system (1), which, in double-wall plastic pipe (B) production, enables the inner wall of the plastic pipe (B) to be exposed to less friction and to be cooled more rapidly, **comprising**
- at least one external mold (2), which enables to shape the plastic pipe (B) as the plastic pipe molten material is placed into the circular inner part thereof, and which includes thereon at least one trough and at least one ridge for production of double-wall pipe production,
- at least one head mold (3), which forms a body for carrying the molten material to the external mold (2) via the passage holes provided thereon, and which has at least one first nozzle (31) that is located at the end part of the passage holes and delivers the molten material to the troughs of the external mold (2) and at least one second nozzle (32) that delivers the molten plastic pipe material to the ridges of the external mold (2),
- at least one circular mandrel (4) which is located at the end part of the head mold (3) where the first nozzle (31) is provided and within the external mold (2), and which enables to shape the inner wall of the plastic pipe (B) by contacting the inner wall of the plastic pipe (B) formed on the external mold (2),
- at least one channel (5), which extends through the mandrel (4) and the head mold (3), and which carries therein the coolant (S) that enables to eliminate the heat resulting on the outer surface of the mandrel (4) and to cool the plastic pipe (B),
- at least one transfer pipe (6), which extends between the mandrel (4) and the first nozzle (31) upon passing through the channel (5), and which has a hollow structure,
- at least one lubricating fluid (7) which passes through the transfer pipe (6) and is spread between the mandrel (4) and the plastic pipe (B) inner wall, reduces the friction occurring between the mandrel (4) and the plastic pipe (B) inner wall, and increases the heat transfer between the plastic pipe (B) and the mandrel (4),
- at least one collector (8), which is located on the end part of the plastic pipe (B) that is between the first nozzle (31) and the mandrel (4), and which directs the lubricating fluid (7) so that it is delivered to different upper surface areas of the mandrel (4),
**characterized in that it comprises**
- at least one dispersing disc (9), which is located between the first nozzle (31) and the mandrel (4), and which enables the lubricating fluid (7) leaving the collector to be transferred in between the mandrel (4) surface and the plastic pipe (B) inner wall.

3. Pipe mold system (1) according to Claim 1 or 2 **comprising** at least one insulation disc (10), which is located between the dispersing disc (9) and the head mold (3) body, and which has heat insulating property.

4. Pipe mold system (1) according to Claim 1 or 2 **comprising** at least one tank which is located at the outer part of the head mold (3) and connected to the transfer pipe (6), and in which the lubricating fluid (7) intended to be delivered to the mandrel (4) surface is stored.

5. Pipe mold system (1) according to Claim 4 **comprising** at least one pump which is located on the tank and which enables the lubricating fluid (7) to be pressurized in the transfer pipe (6).

6. Pipe mold system (1) according to Claim 1 or 2 **comprising** at least one scraper (11), which is located on the other end of the mandrel (4) where the transfer pipe (6) is not located, and which enables to scrape the lubricating fluid (7) layer formed in the inner part of the plastic pipe (B) from the plastic pipe (B) inner wall.

7. Pipe mold system (1) according to Claim 6 comprising at least one recycling system which collects the lubrication fluid (7) removed from the plastic pipe (B) via the scraper (11) and delivers it to the tank for reuse.

8. Pipe mold system (1) according to Claim 1 **comprising** at least one air-liquid mixer for enabling to save on the lubricating fluid (7) that will be used, which mixes the lubricating fluid (7) and air and delivers the mixture to the transfer pipe (6) and which has a injector provided on the end of the transfer pipe (6).

9. Pipe mold system (1) according to Claim 1 or 4 **comprising** at least one cooling exchanger which is preferably located on the tank and which cools the lubricating fluid (7).

10. Pipe mold system (1) according to Claim 6 **comprising** at least one a filter which is preferably located at the inlet of the transfer pipe (6) and prevents passage of any foreign matter besides the lubricating fluid (7) into the transfer pipe (6).

11. Pipe mold system (1) according to Claim 1 or 5 **comprising** at least one control unit, which sends a command to the pump to automatically start or cease operation upon operation or stoppage of the plastic pipe (B) production system.

12. Pipe mold system (1) according to Claim 5 **comprising** at least one control unit which sends a command to the pump to deliver the lubricating fluid (7) to the transfer pipe (6) intermittently or regularly.

13. Pipe mold system (1) according to Claim 12 **comprising** at least one control unit which calculates the lubricating fluid (7) consumption amount and sends a command to the pump for the required oil pressure.

14. Pipe mold system (1) according to Claim 11, 12 or 13 **comprising** at least one interface which enables to deliver the information of lubricating fluid (7) pressure adjustment, amount and the time of transferring it to the transfer pipe (6) as inputs to the control unit.

15. Pipe mold system (1) according to Claim 14 **comprising** an interface which is a touch screen.

16. Pipe mold system (1) according to Claim 1 or 2 **comprising** the transfer pipe (6) which travels within the channel (5) inside the mandrel (4) and enables the lubricating fluid (7) carried therein to be cooled upon performing heat transfer with the coolant (S) passing through the channel (5).

17. Pipe mold system (1) according to Claim 6 **comprising** at least one control unit which automatically activates or deactivates the scraper (11) for cleaning the lubricating fluid (7) from the plastic pipe (B) inner wall or leaving the lubricating fluid (7) in the plastic pipe (B) inner wall.

18. Pipe mold system (1) according to any one of the preceding claims comprising a lubricating fluid (7) which is oil.

19. Pipe mold system (1) according to any one of the preceding claims **comprising** a lubricating fluid (7) which is a silicone-based lubricant.

20. Pipe mold system (1) according to Claim 3 **comprising** a dispersing disc which can rotate around its own axis by the pressure effect of the lubricating fluid (7).

## Patentansprüche

1. Rohrformsystem (1), das bei der Herstellung von Kunststoffrohren (B) ermöglicht, dass die Innenwand des Kunststoffrohrs (B) weniger Reibung ausgesetzt und schneller abgekühlt wird, **umfasst;**
- mindestens eine äußere Form (2), die es ermöglicht, das Kunststoffrohr (B) zu formen, wenn das geschmolzene Material, das Kunststoffrohr (B), in dessen kreisförmigen inneren Teil davon eingesetzt wird,
- mindestens eine Kopfform (3), die einen Körper bildet, um das geschmolzene Material über die darauf vorgesehenen Durchgangslöcher zur äußeren Form (2) zu befördern, und die mindestens eine erste Düse (31) aufweist, die sich am Ende der Durchgangslöcher befindet und ermöglicht die Abgabe des geschmolzenen Materials an die Außenform (2),
- mindestens einen kreisförmigen Dorn (4), der sich am Endteil der Kopfform (3) befindet, wo die erste Düse (31) vorgesehen ist, und innerhalb der Außenform (2) und der es ermöglicht, die Innenwand des Kunststoffrohrs (B) zu formen durch Kontaktieren der Innenwand des Kunststoffrohrs (B), das an der Außenform (2) ausgebildet ist,
- mindestens einen Kanal (5), der sich durch den Dorn (4) und die Kopfform (3) erstreckt und in dem sich das Kühlmittel (S) befindet, das es ermöglicht, die an der Außenfläche des Dorns (4) entstehende Wärme abzuleiten und um das Kunststoffrohr (B) abzukühlen,
- mindestens ein Übertragungsrohr (6), das sich beim Durchgang durch den Kanal (5) zwischen dem Dorn (4) und der ersten Düse (31) erstreckt und eine hohle Struktur aufweist;
- mindestens eine Schmierflüssigkeit (7), die durch das Übertragungsrohr (6) fließt und zwischen dem Dorn (4) und der Innenwand des Kunststoffrohrs (B) verteilt ist, verringert die auftretende Reibung zwischen dem Dorn (4) und der Innerwand des Kunststoffrohrs (B) und erhöht die Wärmeübertragung zwischen dem Kunststoffrohr (B) und dem Dorn (4),
- mindestens einen Kollektor (8), der sich am Endteil des Kunststoffrohrs (B) zwischen der ersten Düse (31) und dem Dorn (4) befindet und der die Schmierflüssigkeit (7) so leitet dass es an verschiedene obere Oberflächenbereiche des Dorns (4) abgegeben und **gekennzeichnet ist, durch**
- mindestens eine Dispergierscheibe (9), die sich zwischen der ersten Düse (31) und dem Dorn (4) befindet und ermöglicht, dass die Schmierflüssigkeit (7), die den Kollektor verlässt, zwischen der Oberfläche des Dorns (4) und der Innenwand des Kunststoffrohrs (B) übertragen wird.

2. Ein Rohrformsystem (1), das bei der Herstellung von doppelwandigen Kunststoffrohren (B) ermöglicht, dass die Innenwand des Kunststoffrohrs (B) weniger Reibung ausgesetzt und schneller abgekühlt wird, **umfasst;**
- mindestens eine äußere Form (2), die es ermöglicht, das Kunststoffrohr (B) zu formen, wenn das geschmolzene Kunststoffrohrmaterial in den kreisförmigen inneren Teil davon eingebracht wird, und die mindestens eine Wanne und mindestens einen Grat für die Herstellung der doppelwandigen Rohrherstellung enthält,
- mindestens eine Kopfform (3), die einen Körper bildet, um das geschmolzene Material über die darauf vorgesehenen Durchgangslöcher zur äußeren Form (2) zu befördern, und die mindestens eine erste Düse (31) aufweist, die sich am Endteil der Durchgangslöcher befindet und liefert das geschmolzene Material zu den Mulden der Außenform (2) und mindestens eine zweite Düse (32), die das geschmolzene Kunststoffrohrmaterial zu den Rippen der Außenform (2) liefert;
- mindestens einen kreisförmigen Dorn (4), der sich am Endteil der Kopfform (3) befindet, wo die erste Düse (31) vorgesehen ist, und innerhalb der Außenform (2) und der es ermöglicht, die Innenwand des Kunststoffrohrs (B) zu formen, durch Kontaktieren die Innenwand des Kunststoffrohrs (B), das an der Außenform (2) ausgebildet ist,
- mindestens einen Kanal (5), der sich durch den Dorn (4) und die Kopfform (3) erstreckt und in dem sich das Kühlmittel (S) befindet, das es ermöglicht, die an der Außenfläche des Dorns (4) entstehende Wärme zu beseitigen, und das Kunststoffrohr (B) zu kühlen, und **gekennzeichnet durch**
- mindestens ein Übertragungsrohr (6), das sich beim Durchgang durch den Kanal (5) zwischen dem Dorn (4) und der ersten Düse (31) erstreckt und eine hohle Struktur aufweist;
- mindestens eine Schmierflüssigkeit (7), die **durch** das Übertragungsrohr (6) fließt und zwischen dem Dorn (4) und der Innenwand des Kunststoffrohrs (B) verteilt ist, verringert die zwischen dem Dorn (4) und der Innenwand des Kunststoffrohrs (B) auftretende Reibung, und erhöht die Wärmeübertragung zwischen dem Kunststoffrohr (B) und dem Dorn (4),
- mindestens einen Kollektor (8), der sich am Endteil des Kunststoffrohrs (B) zwischen der ersten Düse (31) und dem Dorn (4) befindet und, der die Schmierflüssigkeit (7) so leitet dass es an verschiedene obere Oberflächenbereiche des Dorns (4) abgegeben wird, **die dadurch gekennzeichnet sind, dass es umfasst**
- mindestens eine Dispergierscheibe (9), die sich zwischen der ersten Düse (31) und dem Dorn (4) befindet und ermöglicht, dass die Schmierflüssigkeit (7), die den Kollektor verlässt, zwischen der Oberfläche des Dorns (4) und der Innenwand des Kunststoffrohrs (B) übertragen wird.

3. Rohrformsystem (1) nach Anspruch 1 oder 2, bestehend mindestens aus einer Isolierscheibe (10), die sich zwischen der Dispergierscheibe (9) und dem Kopfformkopf (3) befindet und wärmeisolierende Eigenschaften aufweist.

4. Rohrformsystem (1) nach Anspruch 1 oder 2, bestehend mindestens aus einem Tank, der sich am äußeren Teil der Kopfform (3) befindet und mit dem Transferrohr (6) verbunden ist und in dem die Schmierflüssigkeit (7) zur Lieferung an die Oberfläche des Dorns (4) bestimmt ist.

5. Rohrformsystem (1) nach Anspruch, bestehend mindestens aus einer Pumpe, die sich am Tank befindet und die es ermöglicht, die Schmierflüssigkeit (7) in dem Transferrohr (6) unter Druck zu setzen.

6. Rohrformsystem (1) nach Anspruch 1 oder 2, bestehend mindestens aus einem Schaber (11), der sich am anderen Ende des Dorns (4) befindet, wo sich das Transferrohr (6) nicht befindet, und der dies ermöglicht um die im inneren Teil des Kunststoffrohrs (B) gebildete Schmierflüssigkeitsschicht (7) von der Innenwand des Kunststoffrohrs (B) abzukratzen.

7. Rohrformsystem (1) nach Anspruch 6, bestehend mindestens aus einem Recyclingsystem, das die aus dem Kunststoffrohr (B), über eine Schaber (11), entfernte Schmierflüssigkeit (7) sammelt und zur Wiederverwendung an den Tank liefert .

8. Rohrformsystem (1) nach Anspruch 1, mindestens aus einem Luft-Flüssigkeits-Mischer, um die verwendete Schmierflüssigkeit (7) einzusparen, der die Schmierflüssigkeit (7) und Luft mischt und das Gemisch liefert an das Übertragungsrohr (6) und das einen Injektor am Ende des Übertragungsrohrs (6) hat.

9. Rohrformsystem (1) nach Anspruch 1 oder 4, bestehend mindestens aus einem Austauscher, der sich vorzugsweise am Tank befindet und die Schmierflüssigkeit (7) kühlt.

10. Rohrformsystem (1) nach Anspruch 6, bestehend mindestens aus einem Filter, der sich vorzugsweise am Einlass des Übertragungsrohrs (6) befindet und das Eindringen von Fremdkörpern neben der Schmierflüssigkeit (7) in das Übertragungsrohr (6) verhindert.

11. Rohrformsystem (1) nach Anspruch 1 oder 5, bestehend mindestens aus einer Steuereinheit, die einen Befehl an die Pumpe sendet, um den Betrieb automatisch zu starten oder einzustellen, wenn das Produktionssystem für Kunststoffrohre (B) in Betrieb oder gestoppt ist.

12. Rohrformsystem (1) nach Anspruch 5, bestehend mindestens aus einer Steuereinheit, die einen Befehl an die Pumpe sendet, um die Schmierflüssigkeit (7) periodisch oder regelmäßig an das Transferrohr (6) zu fördern.

13. Rohrformsystem (1) nach Anspruch 12, bestehend mindestens aus einer Steuereinheit, die die Verbrauchsmenge der Schmierflüssigkeit (7) berechnet und einen Befehl an die Pumpe weit über den erforderlichen Öldruck sendet.

14. Rohrformsystem (1) nach Anspruch 11, 12 oder 13, umfassend mindestens aus einer Schnittstelle, die es ermöglicht, die Information über die Druckeinstellung, die Menge und die Zeit der Übertragung der Schmierflüssigkeit (7), zum Transferrohr (6), als Eingaben an die Steuereinheit zu liefern.

15. Rohrformsystem (1) nach Anspruch 14, bestehend aus einer Schnittstelle, die ein Tastbildschirm ist.

16. Rohrformsystem (1) nach Anspruch 1 oder 2, bestehend aus einem Übertragungsrohr (6), das sich binnen des Kanals (5) innerhalb des Dorns (4) bewegt und das Abkühlen der darin mitgeführten Schmierflüssigkeit (7) beim Ausführen der Wärmeübertragung mit dem Kühlmittel (S) durch den Kanal (5) ermöglicht.

17. Rohrformsystem (1) nach Anspruch 6, bestehend mindestens aus einer Steuereinheit, die den Schaber (11) automatisch aktiviert oder deaktiviert, um die Schmierflüssigkeit (7) von der Innenwand des Kunststoffrohrs (B) zu reinigen oder die Schmierflüssigkeit (7) in die Innenwand des Kunststoffrohrs (B) zu lassen.

18. Rohrformsystem (1) nach einem der vorhergehenden Ansprüche, bestehend aus einer Schmierflüssigkeit (7), die Öl ist.

19. Rohrformsystem (1) nach einem der vorhergehenden Ansprüche, bestehend aus einer Schmierflüssigkeit (7), die ein Schmiermittel auf Silikonbasis ist.

20. Rohrformsystem (1) nach Anspruch 3, bestehend aus einer Dispergierscheibe, die sich durch den Druckeffekt der Schmierflüssigkeit (7) um ihre eigene Achse drehen kann.

## Revendications

1. Un système de moulage de tuyaux (1) qui, dans la production de tuyaux en plastique (B), permet à la paroi intérieure du tuyau en plastique (B) d'être exposée à moins de friction et d'être refroidie plus rapidement, **comprenant**
- au moins un moule externe (2) qui permet de façonner le tuyau en plastique (B) lorsque le matériau fondu du tuyau en plastique (B) est placé dans la partie intérieure circulaire de celui-ci,
- au moins un moule de tête (3), qui forme un corps pour transporter le matériau fondu vers le moule externe (2) via les trous de passage prévus sur celui-ci, et qui a au moins une première buse (31) qui est située à la partie d'extrémité des trous de passage et permet au matériau fondu d'être délivré sur le moule externe (2),
- au moins un mandrin circulaire (4) qui est situé à la partie d'extrémité du moule de tête (3) où la première buse (31) est prévue et à l'intérieur du moule externe (2), et qui permet de façonner la paroi intérieure du tuyau en plastique (B) en contact avec la paroi intérieure du tuyau en plastique (B) formé sur le moule extérieur (2),
- au moins un canal (5), qui s'étend à travers le mandrin (4) et le moule de tête (3), et qui y transporte le liquide de refroidissement (S) qui permet d'éliminer la chaleur résultant de la surface extérieure du mandrin (4) et pour refroidir le tuyau en plastique (B),
- au moins un tuyau de transfert (6), qui s'étend entre le mandrin (4) et la première buse (31) lors du passage à travers le canal (5), et qui a une structure creuse,
- au moins un fluide lubrifiant (7) qui traverse le tuyau de transfert (6) et est réparti entre le mandrin (4) et la paroi intérieure du tuyau en plastique (B), réduit le frottement entre le mandrin (4) et la paroi intérieure du tuyau en plastique (B), et augmente le transfert de chaleur entre le tuyau en plastique (B) et le mandrin (4),
- au moins un collecteur (8), qui est situé sur la partie d'extrémité du tuyau en plastique (B) qui est entre la première buse (31) et le mandrin (4), et qui dirige le fluide lubrifiant (7) de sorte qu'il est délivré à différentes surfaces supérieures du mandrin (4) et **caractérisé par**
- au moins un disque de dispersion (9), qui est situé entre la première buse (31) et le mandrin (4), et qui permet au fluide lubrifiant (7) sortant du collecteur d'être transféré entre la surface du mandrin (4) et la paroi intérieure du tuyau en plastique (B).

2. Un système de moulage de tuyaux (1) qui, dans la production de tuyaux en plastique à double paroi (B), permet à la paroi intérieure du tuyau en plastique (B) d'être exposée à moins de frottement et d'être refroidie plus rapidement, **comprenant**
- au moins un moule externe (2), qui permet de façonner le tuyau en plastique (B) lorsque le matériau fondu du tuyau en plastique est placé dans sa partie intérieure circulaire, et qui comprend sur celui-ci au moins un creux et au moins une crête pour la production de tuyaux à double paroi,
- au moins un moule de tête (3), qui forme un corps pour transporter le matériau fondu vers le moule externe (2) via les trous de passage prévus sur celui-ci, et qui a au moins une première buse (31) qui est située à la partie d'extrémité des trous de passage et délivre le matériau fondu dans les creux du moule externe (2) et au moins une seconde buse (32) qui délivre le matériau fondu de tuyau en plastique aux arêtes du moule externe (2),
- au moins un mandrin circulaire (4) qui est situé à la partie d'extrémité du moule de tête (3) où la première buse (31) est prévue et à l'intérieur du moule externe (2), et qui permet de façonner la paroi intérieure du tuyau en plastique (B) en contactant la paroi intérieure du tuyau en plastique (B) formé sur le moule externe (2),
- au moins un canal (5), qui s'étend à travers le mandrin (4) et le moule de tête (3), et qui y transporte le liquide de refroidissement (S) qui permet d'éliminer la chaleur résultant de la surface extérieure du mandrin (4) et pour refroidir le tuyau en plastique (B),
- au moins un tuyau de transfert (6), qui s'étend entre le mandrin (4) et la première buse (31) lors du passage à travers le canal (5), et qui a une structure creuse,
- au moins un fluide lubrifiant (7) qui traverse le tuyau de transfert (6) et est réparti entre le mandrin (4) et la paroi intérieure du tuyau en plastique (B), réduit la fiction se produisant entre le mandrin (4) et la paroi intérieure du tuyau en plastique (B), et augmente le transfert de chaleur entre le tuyau en plastique (B) et le mandrin (4),
- au moins un collecteur (8), qui est situé sur la partie d'extrémité du tuyau en plastique (B) qui est entre la première buse (31) et le mandrin (4), et qui dirige le fluide lubrifiant (7) de sorte qu'il est délivré à différentes surfaces supérieures du mandrin (4) **caractérisé en ce qu'il comprend**
- au moins un disque de dispersion (9), qui est situé entre la première buse (31) et le mandrin (4), et qui permet au fluide lubrifiant (7) sortant du collecteur d'être transféré entre la surface du mandrin (4) et la paroi intérieure du tuyau en plastique (B).

3. Système de moulage de tuyaux (1) selon la Clause 1 ou 2, **comprenant** au moins un disque d'isolation (10), qui est situé entre le disque de dispersion (9) et le corps de moule de tête (3), et qui a une propriété d'isolation thermique.

4. Système de moulage de tuyaux (1) selon la Clause 1 ou 2, comprenant au moins un réservoir qui est situé à la partie extérieure du moule de tête (3) et connecté au tuyau de transfert (6), et dans lequel le fluide lubrifiant (7) destiné à être délivré à la surface du mandrin (4) est stocké.

5. Système de moulage de tuyaux (1) selon la Clause 4, **comprenant** au moins une pompe qui est située sur le réservoir et qui permet au fluide lubrifiant (7) d'être mis sous pression dans le tuyau de transfert (6).

6. Système de moulage de tuyaux (1) selon la Clause 1 ou 2, **comprenant** au moins un racleur (11), qui est situé à l'autre extrémité du mandrin (4) où le tuyau de transfert (6) n'est pas situé, et qui permet de racler la couche de fluide lubrifiant (7) formée dans la partie intérieure du tuyau en plastique (B) de la paroi intérieure du tuyau en plastique (B).

7. Système de moulage de tuyau (1) selon la Clause 6, **comprenant** au moins un système de recyclage qui recueille le fluide de lubrification (7) retiré du tuyau en plastique (B) via le racleur (11) et le remet au réservoir pour réutilisation.

8. Système de moulage de tuyau (1) selon la Clause 1, **comprenant** au moins un mélangeur air-liquide pour permettre d'économiser sur le fluide lubrifiant (7) qui sera utilisé, qui mélange le fluide lubrifiant (7) et l'air et délivre le mélange au tuyau de transfert (6) et qui a un injecteur prévu à l'extrémité du tuyau de transfert (6).

9. Système de moulage de tuyau (1) selon la Clause 1 ou 4, **comprenant** au moins un échangeur de refroidissement qui est de préférence situé sur le réservoir et qui refroidit le fluide lubrifiant (7).

10. Système de moulage de tuyau (1) selon la Clause 6, **comprenant** au moins un filtre qui est de préférence situé à l'entrée du tuyau de transfert (6) et empêche le passage de toute matière étrangère en plus du fluide lubrifiant (7) dans le tuyau de transfert (6).

11. Système de moulage de tuyau (1) selon la Clause 1 ou 5, **comprenant** au moins une unité de commande, qui envoie une commande à la pompe pour démarrer ou arrêter automatiquement le fonctionnement lors du fonctionnement ou de l'arrêt du système de production de tuyau en plastique (B).

12. Système de moulage de tuyau (1) selon la Clause 5, **comprenant** au moins une unité de commande qui envoie une commande à la pompe pour délivrer le fluide lubrifiant (7) au tuyau de transfert (6) par intermittence ou régulièrement.

13. Système de moulage de tuyau (1) selon la Clause 12, **comprenant** au moins une unité de commande qui calcule la quantité de consommation de fluide lubrifiant (7) et envoie une commande à la pompe pour la pression d'huile requise.

14. Système de moulage de tuyau (1) selon la Clause 11, 12 ou 13, **comprenant** au moins une interface qui permet de fournir les informations de réglage de pression du fluide lubrifiant (7), la quantité et le temps de le transférer vers le tuyau de transfert (6) en tant qu'entrées à l'unité de commande.

15. Système de moulage de tuyau (1) selon la Clause 14, **comprenant** une interface qui est un écran tactile.

16. Système de moulage de tuyau (1) selon la Clause 1 ou 2, **comprenant** le tuyau de transfert (6) qui se déplace à l'intérieur du canal (5) à l'intérieur du mandrin (4) et permet au fluide de lubrification (7) qui y est transporté d'être refroidi lors d'un transfert de chaleur le liquide de refroidissement (S) traversant le canal (5).

17. Système de moulage de tuyau (1) selon la Clause 6, **comprenant** au moins une unité de commande qui active ou désactive automatiquement le racleur (11) pour nettoyer le fluide lubrifiant (7) de la paroi intérieure du tuyau en plastique (B) ou laisser le fluide lubrifiant (7) dans la paroi intérieure du tuyau en plastique (B).

18. Système de moulage de tuyau (1) selon l'une des Clauses précédentes, **comprenant** un fluide lubrifiant (7) qui est de l'huile.

19. Système de moulage de tuyau (1) selon l'une des Clauses précédentes, **comprenant** un fluide lubrifiant (7) qui est un lubrifiant à base de silicone.

20. Système de moulage de tuyau (1) selon la Clause 3, **comprenant** un disque de dispersion qui peut tourner autour de son propre axe par l'effet de pression du fluide lubrifiant (7).
